# EUROPEAN PATENT SPECIFICATION

(11) **EP 4 392 964 B1**
(45) Date of publication and mention of the grant of the patent: **29.04.2026**
(21) Application number: 22873319.2
(22) Date of filing: 21.09.2022
(51) Int. Cl.: G09B 23/30, G01M 7/08

(54) **THORAX IMPACTOR TO BE USED IN PEDESTRIAN PROTECTION TESTS**
THORAX-IMPAKTOR ZUR VERWENDUNG BEI FUSSGÄNGERSCHUTZTESTS
IMPACTEUR THORACIQUE DESTINÉ À ÊTRE UTILISÉ DANS DES TESTS DE PROTECTION DE PIÉTONS

(30) Priority: 24.09.2021 TR 202114954
(43) Date of publication of application: 03.07.2024
(73) Proprietor: ORTA DOGU TEKNIK UNIVERSITESI, 06800 Ankara (TR)
(72) Inventor: SARAÇ KARADENIZ, Sevgi, Ankara (TR); GÖKLER, Mustafa lhan, Ankara (TR)
(74) Representative: Yalçiner Patent and Consulting Ltd.
(86) International application number: PCT/TR2022/051023
(87) International publication number: WO 2023/048686

(56) References cited:
- US-A- 5 317 931
- US-A1- 2017 278 430
- US-B1- 6 439 070
- US-B1- 7 508 530

## Description

### TECHNICAL FIELD

The invention is generally related to a thorax impactor that represents the chest area of pedestrians, which can be used with linear impactors in pedestrian protection tests.

### PRIOR ART

Developed countries of the world set out policies and carry out studies for zero deaths in traffic accidents. Automotive companies continuously perform research, design, and testing activities to increase the safety of drivers, passengers, and pedestrians for the same goal. When the history of the vehicle safety standards is examined, it can be seen that they have been created basically for the safety of the driver and passengers within the vehicle. However, according to the "Global Road Safety Report" published by World Health Organization (WHO) in 2018, pedestrians have a significant ratio of 23% among total deaths in traffic accidents. The idea of designing and producing vehicles in a way that is safe for pedestrians outside of the vehicle during the accident as well, has emerged recently, and related standards were created and started to be applied for this purpose. The vehicle front geometry, structure, and materials that are used, directly influence pedestrian fatality and injury during the accident. Therefore, automotive companies consider pedestrian safety in vehicle front designs and perform a lot of pedestrian protection tests for validation and certification for their designs. In addition to the tests for driver and passenger safety, tests for pedestrian protection are carried out in many vehicle safety test laboratories around the world.

The standard pedestrian protection tests have been defined to evaluate the damages (injuries, fatality) that will occur on various parts of the pedestrian's body during an accident involving the vehicle hitting the pedestrian. In these tests, the scenario in which a pedestrian who is crossing the street is hit by a vehicle front from his/her right is tested. At present, the pedestrian protection tests are carried out with the standard test forms representing only the head, upper leg, lower leg parts of the body. However, a standard test form that represents the thorax area of the pedestrians is not available, and no tests to evaluate the injuries to this area are performed. Therefore, the thorax impactor of the invention which is designed in a way to represent the thorax of the pedestrian's body and which can be used with linear impactors is novel and unprecedented in the world. By using the thorax impactor of the invention, it will be possible for automotive companies to validate their vehicle front designs with physical tests by considering the injuries to the pedestrian's thorax.

At present, the standard pedestrian protection tests are carried out with the standard test forms representing only the head, upper leg, lower leg parts of the body. In these tests, the scenario in which a pedestrian who is crossing the street is hit by a vehicle front from his/her right is tested. When statistical studies are considered, it is hypothesized that the most fatal injuries are to the head. Although leg injuries are not fatal, the present test standards have been created considering that their frequency of occurrence is high. However, with these statistical studies and hypotheses being valid for a standard passenger car, it is seen that injuries to different areas of the body are prominent in frequency and severity when flat front vehicles such as buses and minibusses are considered. For flat front vehicles, it is seen that the frequency and severity of thorax injuries show a significant increase compared to passenger cars. At present, there is no standard pedestrian safety form in which the injuries to the thorax area can be evaluated. The model subject of the invention is a novel model designed to represent the thorax area of the pedestrians' body and to evaluate the pedestrian injuries caused by flat front vehicles with tests.

There are many standards defining the tests for driver and passenger safety that are used for the evaluation and certification of the safety of the vehicles and vehicle parts during a crash.. The ECE standards used in the European Union and the FMVSS standards used in the USA can be given as examples. The tests for driver and passenger safety are performed by using crash test dummies (ATD-Anthropometric Test Device). Test dummies that have different structures and that comprise different instrumentation have been designed to test various crash scenarios such as frontal, rear, and side crash; and these standard test dummies are used by the test laboratories. To perform the frontal crash tests, HIII dummy family and THOR dummy family, to perform the side crash tests, ES-2 and WorldSID dummies, and to perform the rear crash tests, BioRID II dummies are used. These dummies have the necessary structure and instrumentation to measure the thorax injuries of the drivers and passengers during the accident. However, the method used in pedestrian safety tests involves the standard forms representing the various parts of the body being launched towards the vehicle, and therefore, it is not possible to use the crash test dummies in these tests.

There is also a pedestrian dummy named H-III 50 PED Dummy provided by the crash test dummy manufacturers. This test dummy is formed by making changes to the lumbar, pelvis, and knee areas of the HIII crash test dummy and transforming it into a self-standing structure. The instrumentation is the same as the HIII test dummies. This dummy is used in some research laboratories for examining the total behavior of the pedestrian during the accident and taking measurements from areas such as the knee and head to evaluate the injuries . No tests were defined in any official test procedures in which the H-III 50 PED test dummy is used. The thorax area's structure and instrumentation of this dummy are the same as the HIII front crash test dummy, therefore, it is suitable for front crash scenarios. Therefore, the H-III 50 PED test dummy is not suitable for evaluating the injuries in the scenario in which the pedestrian's thorax is hit by a vehicle from the side, which is the purpose of the invention.

Another test performed in the automotive industry to evaluate the injuries to the head and chest area of the driver during the accident is the ECE R12 test. In this test, a standard body block is launched to the steering mechanism with a linear impactor test system. With the help of a single axis accelerometer located at the center of gravity of the block, the impact force during the crash is calculated, and the evaluation is made based on the injury criteria. Since this form is designed to test the front crash scenario and it is a low-level detail form in terms of structure and instrumentation, it is not possible to use the same in pedestrian protection tests.

The subject of the patent number US 4,701,132 dated 1987 is a test dummy to be used in crash tests. This dummy resembles the HIII dummies used in driver and passenger safety tests today and it is not possible to use the same in pedestrian protection tests.

The subject of the patent number US 5,018,977 dated 1991 is the test dummy used in the simulation of motorbike accidents and the test method in which the dummy is used. To provide that this test dummy imitates a motorbike driver during the test, its hands have been designed in the way to hold the handles. The chest area of the dummy in question does not have the structure and instrumentation that can measure the impacts from the side, therefore, it is not possible to use the same in pedestrian protection tests.

The subject of the patent number US 6,439,070 B1 dated 2002 is a rib set for a crash test dummy. This rib set is used in 3 as the upper, middle, and lower rib sets in the ES-2 test dummy. A spring-damper mechanism has been used to provide rib deflection in a controlled manner. The structure of this rib set is rather complicated and the cost is quite high. In addition, the rib set has been designed to be used with the ES-2 test dummy, it is not possible to use the same as a separate form in pedestrian protection tests.

The subject of the patent number US 2003/0066365 A1 dated 2003 is a instrumented torso model . This torso model is specially designed to test armored designs for military purposes. Simulated bones that have the material properties of the human rib bone and simulated tissue that has the material properties of the human tissue have been used. Thereby, the localized fractures and splits to be formed on the bone as a result of a bullet hitting can be determined. Nonetheless, the ribs of the crash test dummies have been designed from steel material to bear many tests and the general deflection of the rib is represented. The fragile structure of the model of this patent does not enable the use of the same in vehicle or pedestrian protection tests.

The subject of the patent number US 2013/0000426A1 dated 2013 is a crash test dummy rib cage assembly in which the plastic and metallic materials are used together. The invention in question is the rib cage of a 3-year-old side crash test dummy, the weight and physical measurements of the same representing a 3-year-old child. In addition, the invention in question has been designed to be used with the test dummy. It can not be used to represent the thorax area of an adult in pedestrian protection tests.

The subject of the patent number EP 3 223 264 A1 dated 2017 is a a rib that emerged by making changes to the material and production method of the ribs used in crash test dummies to increase their biofidelity and a crash test dummy that is formed by connecting these ribs to the thorax region. The invention in question is for driver/passenger safety in the front crash test scenarios and it is not possible to use the same in pedestrian protection tests.

As a result, improvements are made to the thorax impactors used in pedestrian protection tests, therefore, new embodiments that bring solutions to the present systems, and eliminate the above-mentioned disadvantages are needed.

### PURPOSE OF THE INVENTION

The present invention is related to a thorax impactor that meets the above-mentioned requirements, eliminates all the disadvantages, and brings some additional advantages.

The main purpose of the invention is to put forth a model that represents the thorax area of the pedestrians' body and provides for the evaluation of pedestrian injuries caused by flat front vehicles with tests.

A purpose of the invention is to provide the damaged parts of the model to be changed easily, following a crash test.

Another purpose of the invention is to provide a more robust model compared to the crash test dummies in high impact crash scenarios.

Another purpose of the invention is to put forth a test model with lower costs.

The structural and characteristic features of the invention, as well as all the advantages, will be understood more clearly through the figures below and the detailed description given by referencing these figures. Therefore, the evaluation should be made in consideration of these figures and the detailed description.

### BRIEF DESCRIPTION OF THE FIGURES

To understand the embodiment of the invention together with the additional elements in the best possible manner, it should be considered together with the figures whose explanation is given below.
Figure 1 is the view of the thorax impactor of the invention.
Figure 2 is another view of the thorax impactor of the invention.

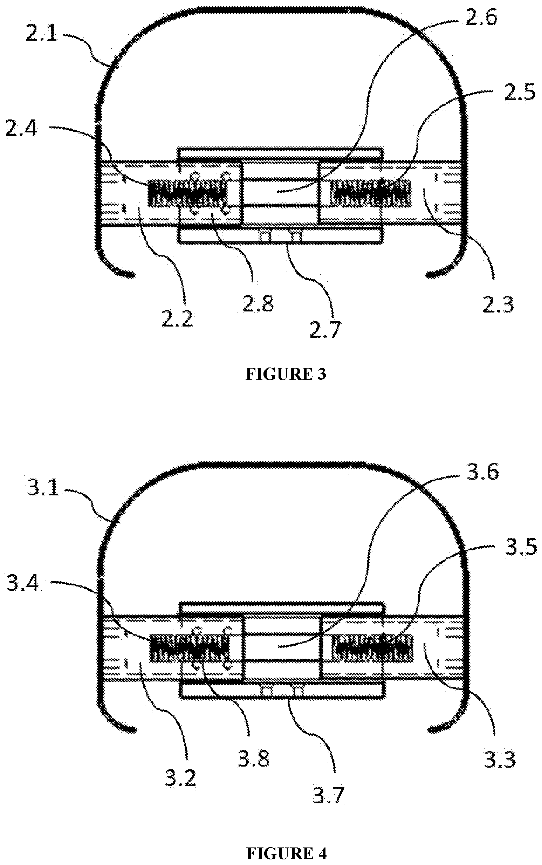

Figure 3 is the view of the upper rib set parts of the invention.
Figure 4 is the view of the lower rib set parts of the invention.

### REFERENCE NUMERALS

1. Thorax impactor
2. Upper rib set
   2.1. Upper rib
   2.2. Upper left piston
   2.3. Upper right piston
   2.4. Upper left spring
   2.5. Upper right spring
   2.6. Upper pin
   2.7. Upper rail
   2.8. Upper cylindrical cavity
3. Lower rib set
   3.1. Lower rib
   3.2. Lower left piston
   3.3. Lower right piston
   3.4. Lower left spring
   3.5. Lower right spring
   3.6. Lower pin
   3.7. Lower rail
   3.8. Lower cylindrical cavity
4. Upper bracket
5. Lower bracket
6. Upper flesh
7. Lower flesh
8. Rear bracket
9. Skin
10. Mounting bracket

### DETAILED DESCRIPTION OF THE INVENTION

In this detailed description, the preferred embodiments of the thorax impactor (1) of the invention are described only for a better understanding of the subject and in the way to create no limiting effect whatsoever.

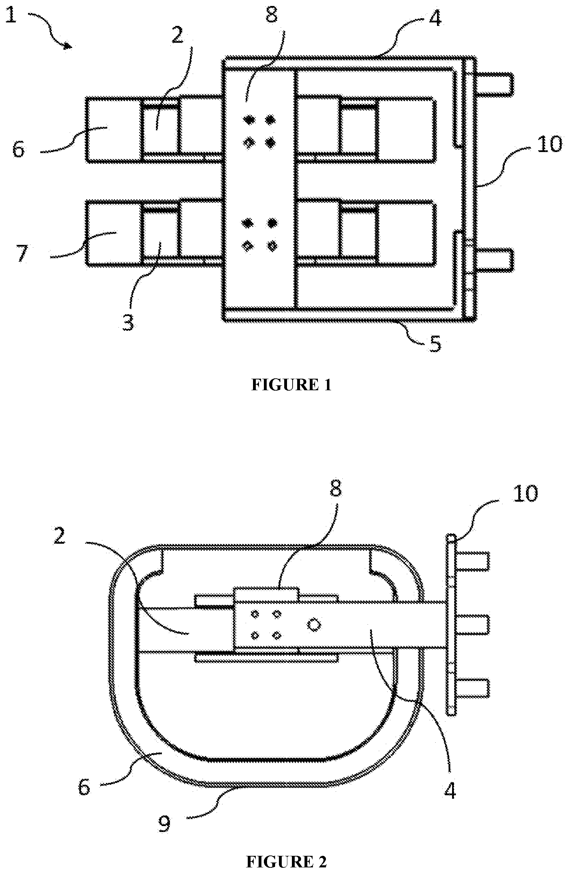

In Figure 1, a view of the thorax impactor (1) of the invention is shown. The thorax impactor (1) represents the body part from the upper abdomen to the neck of a person. Preferably, 2 rib sets were used that have a structure to allow for the thorax impactor (1) to deflect during impact created by the crash with the vehicle. These are the upper rib set (2) and the lower rib set (3). The upper rib set (2) comprises an upper rib (2.1) representing the rib, produced from sheet material (such as steel, preferably AISI 1070 steel or aluminum), at least one upper left piston (2.2), and at least one upper right piston (2.3) (such as steel, preferably AISI 4140 steel or aluminum) that have upper cylindrical cavities (2.8) within. The purpose of the upper cylindrical cavities (2.8) and lower cylindrical cavities (3.8) is to place the upper left spring (2.4) and upper right spring (2.5) and the lower left spring (3.4) and the lower right spring (3.5) within, and restrict the movement of the upper pin (2.6) and lower pin (3.6) axially. The deflection is aimed to occur on a single axis. The mentioned upper cylindrical cavities (2.8) are composed of at least one upper left spring (2.4) and at least one upper right spring (2.5) positioned within the cavities, and at least one upper pin (2.6) (such as steel, preferably AISI 4140 steel or aluminum) moving axially within the upper cylindrical cavities (2.8). The lower rib set (3) comprises a lower rib (3.1) representing the rib, produced from sheet material (such as steel, preferably AISI 1070 steel or aluminum), at least one lower left piston (3.2), and at least one lower right piston (3.3) (such as steel, preferably AISI 4140 steel or aluminum) that have lower cylindrical cavities (3.8) within. The mentioned lower cylindrical cavities (3.8) are composed of at least one lower left spring (3.4) and at least one lower right spring (3.5) positioned within the cavities, and at least one lower pin (3.6) (such as steel, preferably AISI 4140 steel or aluminum) moving axially within the lower cylindrical cavities (3.8).

In the upper rib set (2) and lower rib set (3), additionally, at least one rail (2.7, 3.7) is present in a way to keep these parts together and support them from the bottom, and the left piston (2.2, 3.2) is fixed to the rail (2.7, 3.7) using connection members. The upper rib set (2) and lower rib set (3) are fixed to the rear bracket (8) representing the human spine with bolts from the back using the upper rail and lower rail (2.7, 3.7) parts.

The rear bracket (8) representing the spine (such as steel, preferably AISI 4140 steel or aluminum), the upper bracket (4) and lower bracket (5) connected with bolts from the top and bottom are connected to the mounting bracket (10) to allow thorax impactor (1) to be attached to the linear impactor test system and launched during the test.

To represent the muscle and fat tissue in the thorax area of the body, upper flesh (6) is adhered to the upper rib set (2), and lower flesh (7) is adhered to the lower rib set (3) as strips. The skin (9) representing the skin of the body is wrapped on the outmost of the thorax impactor (1). The mentioned skin (9) is preferably manufactured from neoprene material.

## Claims

1. A thorax impactor (1) for pedestrian protection tests with linear impactors, comprising:
- At least one upper rib set ( 2) and at least one lower rib set (3) that will allow for the mentioned thorax impactor (1) to be deflected during the impact created by the vehicle crash,
- At least one upper rib (2.1) located on the mentioned upper rib set (2) and representing the rib and at least one lower rib (3.1) located on the lower rib set (3) and representing the rib,
the thorax impactor (1) being **characterized in that** it further comprises:
- At least one upper left piston (2.2), at least one lower left piston (3.2), at least one upper right piston (2.3) and at least one lower right piston (3.3), in which upper cylindrical cavities (2.8) and lower cylindrical cavities (3.8) are present,
- At least one upper left spring (2.4) and at least one upper right spring (2.5) positioned within the mentioned upper cylindrical cavities (2.8), and at least one upper pin (2.6) axially moving within the cavities,
- At least one lower left spring (3.4) and at least one lower right spring (3.5) positioned within the mentioned lower cylindrical cavities (3.8), and at least one lower pin (3.6) axially moving within the cavities,
- At least one upper rail (2.7) and at least one lower rail (3.7) located on the mentioned upper rib set (2) and lower rib set (3), which will hold these parts together and support them from the bottom,
- At least one skin (9) which is located at the outmost of the thorax impactor (1) and which represents the skin of the body.
- At least one mounting bracket (10) which provides for the mentioned thorax impactor (1) to be attached to the linear impactor test system and launched during the test.

2. A thorax impactor (1) according to Claim 1, **characterized in that**; it comprises at least one upper bracket (4) and at least one lower bracket (5) which are connected with bolts to the mentioned rear bracket (8) from the bottom and top.

3. A thorax impactor (1) according to Claim 1, **characterized in that**; it comprises at least one upper flesh (6) located on the mentioned upper rib set (2).

4. A thorax impactor (1) according to Claim 1, **characterized in that;** it comprises at least one lower flesh (7) located on the mentioned lower rib set (3).

5. A thorax impactor (1) according to Claim 1, **characterized in that;** the mentioned skin (9) is neoprene.

6. A thorax impactor (1) according to Claim 1, **characterized in that;** the mentioned upper rib (2.1) is steel or aluminum.

7. A thorax impactor (1) according to Claim 1, **characterized in that;** the mentioned upper left piston (2.2) and lower left piston (3.2) are steel or aluminum.

8. A thorax impactor (1) according to Claim 1, **characterized in that;** the mentioned upper right piston (2.3) and lower right piston (3.3) are steel or aluminum.

9. A thorax impactor (1) according to Claim 1, **characterized in that;** the mentioned upper pin (2.6) and lower pin (3.6) are steel or aluminum.

10. A linear impactor test system for pedestrian protection tests having a thorax impactor (1) to be launched according to any of claim 1 to 9.

11. A pedestrian protection test method **characterized by** launching a thorax impactor (1) according to any of claim 1 to 9.

## Patentansprüche

1. Ein Thoraximpaktor (1) für Fußgängerschutzprüfungen mit linearen Impaktoren, umfassend:
- Mindestens einen oberen Rippensatz (2) und mindestens einen unteren Rippensatz (3), die es ermöglichen, dass der erwähnte Thoraximpaktor (1) während des durch den Fahrzeugcrash verursachten Aufpralls ausgelenkt wird,
- Mindestens eine obere Rippe (2.1), die sich auf dem erwähnten oberen Rippensatz (2) befindet und die Rippe darstellt, und mindestens eine untere Rippe (3.1), die sich auf dem unteren Rippensatz (3) befindet und die Rippe darstellt, wobei der Thoraximpaktor (1) **dadurch gekennzeichnet ist, dass** er ferner Folgendes umfasst:
- Mindestens einen oberen linken Kolben (2.2), mindestens einen unteren linken Kolben (3.2), mindestens einen oberen rechten Kolben (2.3) und mindestens einen unteren rechten Kolben (3.3), in denen obere zylindrische Hohlräume (2.8) und untere zylindrische Hohlräume (3.8) vorhanden sind,
- Mindestens eine obere linke Feder (2.4) und mindestens eine obere rechte Feder (2.5), die innerhalb der erwähnten oberen zylindrischen Hohlräume (2.8) positioniert sind, und mindestens ein oberer Stift (2.6), der sich axial innerhalb der Hohlräume bewegt,
- Mindestens eine untere linke Feder (3.4) und mindestens eine untere rechte Feder (3.5), die in den genannten unteren zylindrischen Hohlräumen (3.8) positioniert sind, und mindestens ein unterer Stift (3.6), der sich axial in den Hohlräumen bewegt,
- Mindestens eine obere Schiene (2.7) und mindestens eine untere Schiene (3.7), die sich auf dem genannten oberen Rippensatz (2) und unteren Rippensatz (3) befinden, die diese Teile zusammenhalten und von unten abstützen,
- Mindestens eine Haut (9), die sich am äußersten Ende des Thoraximpaktors (1) befindet und die Haut des Körpers darstellt,
- Mindestens eine Montagehalterung (10), die dafür sorgt, dass der erwähnte Thoraximpaktor (1) am Linearimpaktor-Prüfsystem befestigt und während der Prüfung gestartet wird.

2. Ein Thoraximpaktor (1) nach Anspruch 1, **dadurch gekennzeichnet, dass** er mindestens eine obere Halterung (4) und mindestens eine untere Halterung (5) umfasst, die mit Schrauben von unten und oben mit der erwähnten hinteren Halterung (8) verbunden sind.

3. Ein Thoraximpaktor (1) nach Anspruch 1, **dadurch gekennzeichnet, dass** er mindestens ein oberes Fleisch (6) umfasst, das sich auf dem erwähnten oberen Rippensatz (2) befindet.

4. Ein Thoraximpaktor (1) nach Anspruch 1, **dadurch gekennzeichnet, dass** er mindestens ein unteres Fleisch (7) umfasst, das sich auf dem erwähnten unteren Rippensatz (3) befindet.

5. Ein Thoraximpaktor (1) nach Anspruch 1, **dadurch gekennzeichnet, dass** die erwähnte Haut (9) Neopren ist.

6. Ein Thoraximpaktor (1) nach Anspruch 1, **dadurch gekennzeichnet, dass** die erwähnte obere Rippe (2.1) Stahl oder Aluminium ist.

7. Ein Thoraximpaktor (1) nach Anspruch 1, **dadurch gekennzeichnet, dass** der erwähnte obere linke Kolben (2.2) und der untere linke Kolben (3.2) Stahl oder Aluminium sind.

8. Ein Thoraximpaktor (1) nach Anspruch 1, **dadurch gekennzeichnet, dass** der erwähnte obere rechte Kolben (2.3) und der untere rechte Kolben (3.3) Stahl oder Aluminium sind.

9. Ein Thoraximpaktor (1) nach Anspruch 1, **dadurch gekennzeichnet, dass** der erwähnte obere Stift (2.6) und der untere Stift (3.6) Stahl oder Aluminium sind.

10. Ein Lineares Impaktorprüfsystem für Fußgängerschutzprüfungen mit einem Thoraximpaktor (1), der nach einem der Ansprüche 1 bis 9 zu starten ist.

11. Ein Fußgängerschutz-Prüfverfahren, **gekennzeichnet durch** Starten eines Thoraximpaktors (1) nach einem der Ansprüche 1 bis 9.

## Revendications

1. Impacteur thoracique (1) pour essais de protection des piétons avec des impacteurs linéaires, comprenant :
- Au moins un ensemble de côtes supérieures (2) et au moins un ensemble de côtes inférieures (3) qui permettront audit impacteur thoracique (1) d'être dévié lors de l'impact créé par la collision du véhicule.
- Au moins une côte supérieure (2.1) située sur ledit ensemble de côtes supérieures (2) et représentant la côte, et au moins une côte inférieure (3.1) située sur l'ensemble de côtes inférieures (3) et représentant la côte, l'impacteur thoracique (1) étant **caractérisé en ce qu'**il comprend en outre :
- Au moins un piston supérieur gauche (2.2), au moins un piston inférieur gauche (3.2), au moins un piston supérieur droit (2.3) et au moins un piston inférieur droit (3.3), dans lesquels sont présentes des cavités cylindriques supérieures (2.8) et des cavités cylindriques inférieures (3.8),
- Au moins un ressort supérieur gauche (2.4) et au moins un ressort supérieur droit (2.5) positionnés à l'intérieur desdites cavités cylindriques supérieures (2.8), et au moins une tige supérieure (2.6) se déplaçant axialement à l'intérieur des cavités,
- Au moins un ressort inférieur gauche (3.4) et au moins un ressort inférieur droit (3.5) positionnés à l'intérieur desdites cavités cylindriques inférieures (3.8), et au moins une tige inférieure (3.6) se déplaçant axialement à l'intérieur des cavités,
- Au moins un rail supérieur (2.7) et au moins un rail inférieur (3.7) situés sur lesdits ensembles de côtes supérieures (2) et ensemble de côtes inférieures (3), qui maintiendront ces pièces ensemble et les soutiendront par le bas,
- Au moins une peau (9) qui est située le plus à l'extérieur de l'impacteur thoracique (1) et qui représente la peau du corps.
- Au moins un support de montage (10) qui permet d'attacher ledit impacteur thoracique (1) au système d'essai d'impacteur linéaire et de le lancer pendant l'essai.

2. Impacteur thoracique (1) selon la revendication 1, **caractérisé en ce qu'**il comprend au moins un support supérieur (4) et au moins un support inférieur (5) qui sont reliés par des boulons audit support arrière (8) par le bas et par le haut.

3. Impacteur thoracique (1) selon la revendication 1, **caractérisé en ce qu'**il comprend au moins une chair supérieure (6) située sur ledit ensemble de côtes supérieures (2).

4. Impacteur thoracique (1) selon la revendication 1, **caractérisé en ce qu'**il comprend au moins une chair inférieure (7) située sur ledit ensemble de côtes inférieures (3).

5. Impacteur thoracique (1) selon la revendication 1, **caractérisé en ce que** ladite peau (9) est en néoprène.

6. Impacteur thoracique (1) selon la revendication 1, **caractérisé en ce que** ladite côte supérieure (2.1) est en acier ou en aluminium.

7. Impacteur thoracique (1) selon la revendication 1, **caractérisé en ce que** ledit piston supérieur gauche (2.2) et ledit piston inférieur gauche (3.2) sont en acier ou en aluminium.

8. Impacteur thoracique (1) selon la revendication 1, **caractérisé en ce que** ledit piston supérieur droit (2.3) et ledit piston inférieur droit (3.3) sont en acier ou en aluminium.

9. Impacteur thoracique (1) selon la revendication 1, **caractérisé en ce que** ladite tige supérieure (2.6) et ladite tige inférieure (3.6) sont en acier ou en aluminium.

10. Système d'essai d'impacteur linéaire pour les essais de protection des piétons, ayant un impacteur thoracique (1) à lancer selon l'une quelconque des revendications 1 à 9.

11. Méthode d'essai de protection des piétons **caractérisée par** le lancement d'un impacteur thoracique (1) selon l'une quelconque des revendications 1 à 9.
